# FASCICULE DE BREVET EUROPEEN

(11) **EP 3 840 103 B1**
(45) Date de publication et mention de la délivrance du brevet: **10.04.2024**
(21) Numéro de dépôt: 20215140.3
(22) Date de dépôt: 17.12.2020
(51) Int. Cl.: H01M 10/42, H01M 10/48, H01M 10/613, H01M 10/625, H01M 10/627, H01M 10/647, H01M 10/65, H01M 10/6568, H01M 4/131, H01M 4/134, H01M 10/0525, H01M 50/105, H01M 50/121, H01M 50/129, H01M 50/131, H01M 50/202, H01M 50/211, H01M 50/291, H01M 50/293

(54) **ACCUMULATEUR ÉLECTROCHIMIQUE, NOTAMMENT UN ACCUMULATEUR MÉTAL-ION, À EMBALLAGE SOUPLE INTÉGRANT DES CANAUX DE REFROIDISSEMENT, MODULE ET PROCÉDÉ DE FABRICATION ASSOCIÉS**
ELEKTROCHEMISCHER AKKU, INSBESONDERE METALL-IONEN-AKKU, MIT WEICHER VERPACKUNG, DIE KÜHLKANÄLE UMFASST, ENTSPRECHENDES MODUL UND ENTSPRECHENDES HERSTELLUNGSVERFAHREN
ELECTROCHEMICAL ACCUMULATOR, IN PARTICULAR A METAL-ION ACCUMULATOR, WITH FLEXIBLE PACKAGING INCLUDING COOLING CHANNELS, ASSOCIATED MODULE AND MANUFACTURING METHOD

(30) Priorité: 17.12.2019 FR 1914634
(43) Date de publication de la demande: 23.06.2021
(73) Titulaire: Commissariat à l'Energie Atomique et aux Energies Alternatives, 75015 Paris (FR)
(72) Inventeur: VINCENT, Rémi, 38054 GRENOBLE (FR); PANARIELLO, Remy, 38054 GRENOBLE (FR); TREMBLAY, Denis, 38054 GRENOBLE (FR)
(74) Mandataire: Cabinet Nony

(56) Documents cités:
- EP-A1- 3 499 606
- EP-B1- 3 499 606
- JP-A- 2006 049 054
- US-A- 5 510 203
- US-A1- 2013 115 505
- US-A1- 2016 254 500
- US-A1- 2017 263 987

## Description

### Domaine technique

La présente invention concerne le domaine des accumulateurs électrochimiques, et plus particulièrement des accumulateurs métal-ion.

L'invention vise principalement à améliorer l'efficacité du refroidissement des accumulateurs d'un pack-batterie tout en diminuant le poids du système de refroidissement. Bien que décrite en référence à un accumulateur Lithium-ion, l'invention s'applique à tout accumulateur électrochimique métal-ion, c'est-à-dire également les accumulateurs sodium-ion, Magnésium-ion, Aluminium-ion...ou de manière plus générale à tout accumulateur électrochimique.

Un pack-batterie selon l'invention peut être embarqué ou stationnaire. Par exemple, les domaines des transports électriques et hybrides et les systèmes de stockage connectés au réseau peuvent être envisagés dans le cadre de l'invention.

### Technique antérieure

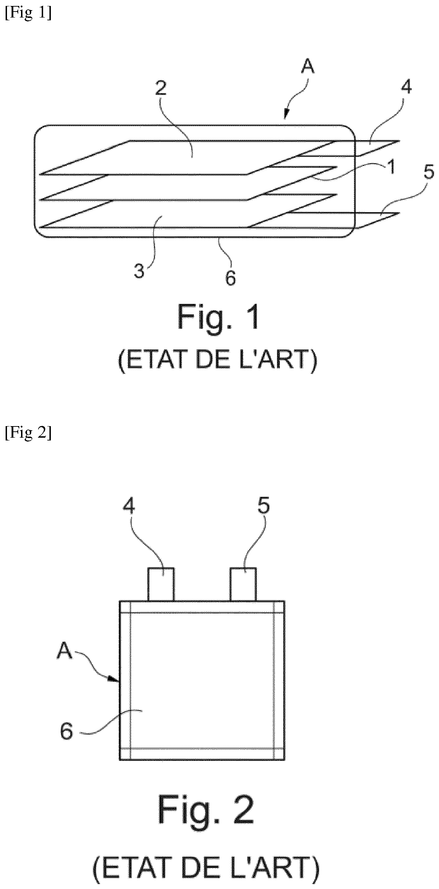

Telle qu'illustrée schématiquement en figures 1 et 2, une batterie ou accumulateur lithium-ion comporte usuellement au moins une cellule électrochimique constituée d'un constituant d'électrolyte 1 entre une électrode positive ou cathode 2 et une électrode négative ou anode 3, un collecteur de courant 4 connecté à la cathode 2, un collecteur de courant 5 connecté à 1' anode 3 et enfin, un emballage 6 agencé pour contenir la cellule électrochimique avec étanchéité tout en étant traversé par une partie des collecteurs de courant 4, 5.

L'architecture des batteries lithium-ion conventionnelles comporte une anode, une cathode et un électrolyte. Plusieurs types de géométrie d'architecture conventionnelle sont connus :
- une géométrie cylindrique telle que divulguée dans la demande de brevet US 2006/0121348,
- une géométrie prismatique telle que divulguée dans les brevets US 7348098, US 7338733;
- une géométrie en empilement telle que divulguée dans les demandes de brevet US 2008/060189, US 2008/0057392, et brevet US 7335448.

Le constituant d'électrolyte 1 peut être de forme solide, liquide ou gel. Sous forme liquide ou gel, le constituant peut comprendre un séparateur en polymère, en céramique ou en composite microporeux imbibé d'électrolyte (s) organique (s) ou de type liquide ionique qui permet le déplacement de l'ion Lithium de la cathode à l'anode pour une charge et inversement pour une décharge, ce qui génère le courant. L'électrolyte est en général un mélange de solvants organiques, par exemple des carbonates dans lesquels est ajouté un sel de lithium typiquement LiPF6.

L'électrode positive ou cathode 2 est constituée de matériaux d'insertion du cation Lithium qui sont en général composite, comme LiFePO₄ (LFP), LiCoO₂ (LCO), LiNiO₂ (LNO), LiMnO₂ ou LiMn₂O₄ (LMO), LiNi_{0.33}Mn_{0.33}Co_{0.33}O₂ (NMC), LiNi_{0.8}Co_{0.15}Al_{0.05}O₂ (NCA). L'électrode négative ou anode 3 est très souvent constituée de carbone graphite ou en Li₄TiO₅O₁₂ (matériau titanate), éventuellement également à base de silicium ou de composite formé à base de silicium.

Le collecteur de courant 4 connecté à l'électrode positive est en général en aluminium.

Le collecteur de courant 5 connecté à l'électrode négative est en général en cuivre, en cuivre nickelé ou en aluminium.

Une batterie ou accumulateur lithium-ion peut comporter bien évidemment une pluralité de cellules électrochimiques qui sont empilées les unes sur les autres.

Traditionnellement, une batterie ou accumulateur Li-ion utilise un couple de matériaux à l'anode et à la cathode lui permettant de fonctionner à un niveau de tension élevé, typiquement égal à 4,4 Volt.

Selon le type d'application visée, on cherche à réaliser soit un accumulateur lithium-ion fin et flexible soit un accumulateur rigide : l'emballage est alors soit souple (appelé « pouch » en langage anglo-saxon), soit rigide et constitue dans ce dernier cas en quelque sorte un boitier.

Les emballages souples sont usuellement fabriqués à partir d'un matériau composite multicouches, constitué d'un empilement de couches d'aluminium recouvertes par un ou plusieurs film(s) en polymère laminés par collage.

Les emballages rigides sont quant à eux utilisés lorsque les applications visées sont contraignantes où l'on cherche une longue durée de vie, avec par exemple des pressions à supporter bien supérieures et un niveau d'étanchéité requis plus strict, typiquement inférieure à 10⁻⁸ mbar.l/s, ou dans des milieux à fortes contraintes comme le domaine aéronautique ou spatial.

Aussi, à ce jour un emballage rigide utilisé est constitué d'un boitier métallique, typiquement en acier inoxydable (inox 316L ou inox 304) ou en aluminium (Al 1050 ou Al 3003), ou encore en titane.

La géométrie de la plupart des boitiers rigides d'emballages d'accumulateurs Li-ion est cylindrique, car la plupart des cellules électrochimiques des accumulateurs sont enroulées par bobinage selon une géométrie cylindrique autour d'un mandrin cylindrique. Des formes prismatiques de boitiers ont également déjà été réalisées par bobinage autour d'un mandrin prismatique.

La demande de brevet FR3004292 décrit l'utilisation de l'intérieur du mandrin en tant que lame d'air pour refroidir à coeur une cellule enroulée d'un accumulateur métal-ion.

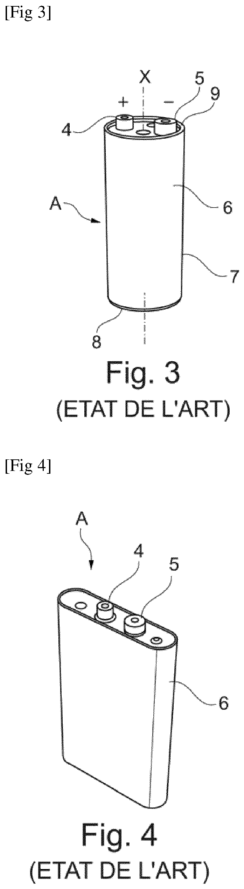

Un des types de boitier rigide de forme cylindrique, usuellement fabriqué pour un accumulateur Li-ion de forte capacité, est illustré en figure 3.

Un boitier rigide de forme prismatique est également montré en figure 4.

Le boitier 6 comporte une enveloppe latérale 7, notamment cylindrique, comme montré sur la figure 3, un fond 8 à une extrémité, un couvercle 9 à l'autre extrémité, le fond 8 et le couvercle 9 étant assemblés à l'enveloppe 7. Le couvercle 9 supporte les pôles ou bornes de sortie du courant 4, 5. Une des bornes de sortie (pôles), par exemple la borne négative 5 est soudée sur le couvercle 9 tandis que l'autre borne de sortie, par exemple la borne positive 4, passe à travers le couvercle 9 avec interposition d'un joint non représenté qui isole électriquement la borne positive 4 du couvercle.

Le type de boitier rigide largement fabriqué consiste également en un godet embouti et un couvercle, soudés entre eux sur leur périphérie. En revanche, les collecteurs de courant comprennent une traversée avec une partie faisant saillie sur le dessus du boitier et qui forme une borne aussi appelée pôle apparent de la batterie.

Un pack batterie P est constitué d'un nombre variable d'accumulateurs pouvant atteindre plusieurs milliers qui sont reliés électriquement en série ou en parallèle entre eux et généralement par des barres de connexion, appelées usuellement busbars.

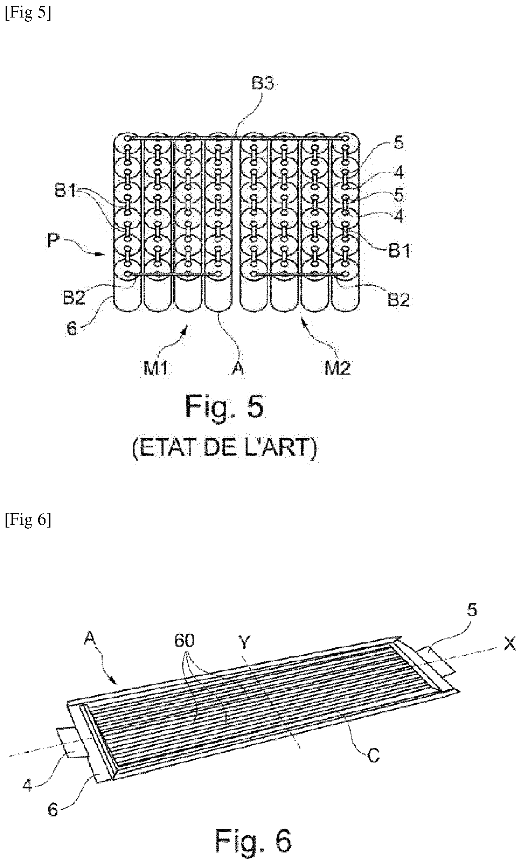

Un exemple de pack-batterie P est montré en figure 5. Ce pack est constitué de deux modules M1, M2 d'accumulateurs Li-ion A identiques et reliés entre eux en série, chaque module M1, M2 étant constitué de quatre rangées d'accumulateurs reliés en parallèle, chaque rangée étant constituée d'un nombre égal à six accumulateurs Li-ion en série.

Comme représenté, la connexion mécanique et électrique entre deux accumulateurs Li-ion d'une même rangée est réalisée par vissage de busbars B1, avantageusement en cuivre, reliant chacune une borne positive 4 à une borne négative 5. La connexion entre deux rangées d'accumulateurs en parallèle au sein d'un même module M1 ou M2 est assurée par un busbar B2, également avantageusement en cuivre. La connexion entre les deux modules M1, M2 est assurée par un busbar B3, également avantageusement en cuivre.

Dans le développement et la fabrication des batteries lithium-ion, pour chaque profil/nouvelle demande, quel que soit les acteurs du marché, cela nécessite des dimensionnements précis (architectures électriques série/parallèle, mécaniques, thermiques...) pour concevoir de manière optimale un pack batterie performant et sûr.

En particulier, la sécurité des accumulateurs lithium-ion doit être prise en considération à la fois à l'échelle d'un accumulateur seul, d'un module et d'un pack-batterie.

Différents dispositifs passifs ou actifs ayant une fonction de sécurité peuvent également être intégrés au niveau d'une cellule (accumulateur), et/ou d'un module et/ou du pack-batterie pour prévenir les problèmes, lorsque la batterie se retrouve dans des conditions dites de fonctionnement abusif ou lors d'un défaut dans une cellule.

Un système électrochimique lithium, que ce soit à l'échelle de la cellule (accumulateur), du module ou du pack, produit des réactions exothermiques quel que soit le profil de cyclage donné. Ainsi, à l'échelle d'un accumulateur unitaire, en fonction des chimies considérées, le fonctionnement optimal des accumulateurs lithium ion est limité dans une certaine gamme de température.

Un accumulateur électrochimique doit fonctionner dans une plage de température définie, typiquement généralement inférieure à 70°C à sa surface extérieure de boitier, sous peine de dégrader ses performances, voire même de le dégrader physiquement jusqu'à destruction. On peut citer pour exemple les accumulateurs lithium de chimie fer-phosphate qui ont une plage de fonctionnement comprise généralement entre -20 °C et +60 °C. Au-delà de 60 °C, les matériaux peuvent subir des dégradations importantes réduisant les performances de la cellule. Au-delà d'une température dite d'emballement thermique pouvant être comprise entre 70°C et 110°C, il y a amorçage de réactions chimiques internes exothermiques. Lorsque l'accumulateur n'est plus capable d'évacuer suffisamment de chaleur, la température de la cellule augmente jusqu'à destruction, ce phénomène étant désigné usuellement sous l'appellation d'emballement thermique (en anglais «*Thermal Runaway*»)*.* Autrement dit, un emballement thermique se produit dans une cellule (accumulateur), lorsque l'énergie dégagée par les réactions exothermiques qui surviennent à l'intérieur de celle-ci, excède la capacité à la dissiper à l'extérieur. Cet emballement peut être suivi d'une génération de gaz et d'explosion et/ou feu.

Également, le maintien d'une température inférieure à 70°C permet d'augmenter la durée de vie d'un accumulateur, car plus la température de fonctionnement d'un accumulateur est élevée, plus sa durée de vie sera diminuée.

En outre, certaines chimies d'accumulateurs requièrent une température de fonctionnement bien au-delà de la température ambiante et par conséquent, il s'avère nécessaire de réguler leur niveau de température par un préchauffage initial des accumulateurs, voire par un maintien en température permanent des accumulateurs.

Dans une batterie, ou pack-batterie à plusieurs accumulateurs Li-ion, la mise en série ou parallèle d'accumulateurs plus ou moins différents peut avoir des conséquences sur les performances et durabilité résultantes pour le pack.

Il est ainsi reconnu que dans un pack-batterie, par exemple de véhicule électrique, les dispersions de vieillissements peuvent être élevées en fonction par exemple de la position des accumulateurs, suite à des dissymétries de vieillissement entre les accumulateurs ou des différences dans les conditions d'utilisation (variations thermiques entre le coeur et les bords du pack, gradient de courant...). Ainsi, des écarts d'états de santé SOH de l'ordre de 20% entre accumulateurs d'un même pack peuvent être observés.

Aussi, afin de limiter le vieillissement prématuré du pack, il est nécessaire d'optimiser la température de fonctionnement et la dispersion de température d'un accumulateur à l'autre. Un accumulateur (ou des accumulateurs) qui vieillit (vieillissent) plus vite que les autres peut (peuvent) avoir un impact direct sur les performances électriques du pack-batterie complet.

A l'échelle du module et du pack, typiquement en dessous de 0°C par exemple, il peut être nécessaire d'avoir recours à un pilotage particulier via un BMS, afin de limiter la puissance demandée au pack et d'éviter une dégradation des accumulateurs.

On rappelle ici que le BMS (acronyme anglais de « *Battery Management System* ») est utilisé afin de suivre l'état des différents accumulateurs (état de charge, état de santé...) et de piloter les différents éléments de sécurité, tels des courants ne devant pas être trop élevés, des potentiels non adaptés (trop élevés ou trop faibles), des températures limites et a donc notamment pour fonction d'arrêter les applications de courant dès l'atteinte de valeurs de tension seuil, i.e. une différence de potentiels entre les deux matériaux d'insertion actifs.

Au-delà d'une température supérieure, typiquement de l'ordre 70°C, il convient également d'être vigilant car des réactions électrochimiques peuvent conduire à la destruction des accumulateurs unitaires et provoquer une propagation d'un défaut interne à l'accumulateur, typiquement un court-circuit interne, qui peut conduire à l'extrême à la destruction ou l'incendie du pack. Dans ce cas, il est également nécessaire d'avoir recours au BMS, afin de protéger les accumulateurs.

Par conséquent, un pack-batterie nécessite généralement un BMS très performant, qui a également pour fonction de générer des équilibrages de tension.

De même, on comprend bien qu'un pack-batterie thermiquement équilibré est aussi une nécessité.

La difficulté intervient pour assurer l'uniformité de la température au sein d'un pack-batterie. Dans la littérature, les solutions divulguées pour tenter d'assurer une homogénéité de température au sein d'un pack-batterie peuvent être classées essentiellement en trois catégories.

La première catégorie concerne les solutions où on fait circuler un fluide caloporteur (gazeux ou liquide) au sein d'un pack-batterie.

Le brevet US5320190 propose ainsi une circulation d'air pour refroidir un pack-batterie de véhicule, soit en utilisant directement l'air impactant le véhicule lors du roulage, soit en ayant recours à un ventilateur pour les phases en stationnement ou juste après le roulage. Le brevet CN202259596U propose un pack-batterie qui intègre des distributeurs en air. Dans la demande de brevet WO2012/165781, il est proposé un système de plaques de guidage d'air qui permet à priori de réduire l'écart de température entre des modules de batteries.

Un liquide de refroidissement peut être utilisé à la place de l'air. Mais, les notions de coût, d'encombrement et de masse supplémentaire peuvent être des facteurs prépondérants en fonction de l'application considérée.

Un refroidissement par air est la solution la moins onéreuse puisque comme indiqué, elle consiste en une ventilation d'air forcée entre les accumulateurs. En revanche, les performances thermiques d'un refroidissement par air sont de faible qualité du fait du coefficient d'échange peu élevé et de sa faible inertie thermique. Ainsi, dans ce type de refroidissement, le premier accumulateur va s'échauffer malgré tout au contact de l'air et la température d'air va augmenter. Au passage du deuxième accumulateur, l'air est plus chaud et l'accumulateur est plus chaud que le premier. Au final, on obtient donc des accumulateurs dont la température est inhomogène et potentiellement trop élevée pour de bonnes conditions de fonctionnement.

Les solutions par refroidissement liquide sont nettement plus efficaces.

Par exemple, les demandes de brevet WO2008/156737, US2011/212356 et US2013/196184 proposent un système de canaux qui épousent chacun une partie de la périphérie de plusieurs accumulateurs cylindriques parallèles les uns aux autres Un liquide caloporteur, tel que de l'eau glycolée s'écoule à l'intérieur de ces canaux pour drainer la chaleur.

Le brevet US8877366 concerne une solution de refroidissement par liquide s'écoulant dans des tubulures externes qui refroidissent par conduction thermique des ailettes insérées entre des accumulateurs.

La deuxième catégorie concerne l'utilisation de plaques froides.

Le brevet US8609268 divulgue ainsi un système de plaque froide à l'intérieur duquel un fluide réfrigérant s'écoule, permettant de drainer la chaleur d'accumulateurs au contact de la plaque froide.

La demande de brevet WO2011/013997 propose des ailettes de refroidissement agencées à l'intérieur d'un empilement de cellules planes pour drainer la chaleur des cellules vers un fluide circulant en bas de l'empilement.

La troisième catégorie concerne le refroidissement par matériau à changement de phase. Ainsi, la demande de brevet US2006/0073377 propose de réguler la température des cellules qui sont noyées au sein du matériau à changement de phase. Le matériau est disposé à l'intérieur d'une enveloppe rigide qui contient les cellules électrochimiques et il comble les espaces entre les cellules adjacentes.

Comme cela ressort de ce qui précède, le système de gestion thermique d'un pack- batterie est d'une importance cruciale et la durée de vie de chacun des accumulateurs dépend directement de ce système, qui représente un poids et un volume dans le système batterie.

À mesure que le niveau de puissance de charge augmente, en particulier avec des temps de recharge requis plus courts, le système de gestion thermique joue un rôle encore plus important car ils doivent évacuer encore plus de chaleur. Plus particulièrement, pour les applications aux véhicules automobiles, des dispositifs de charge de très grande puissance sont d'ores et déjà annoncés, typiquement à des valeurs de 120 kW et 150 kW pour une charge d'un pack-batterie.

Ainsi, le développement d'un système de refroidissement d'un pack-batterie qui soit à la fois efficace, léger et de faible volume est un enjeu particulièrement important.

Et, toutes les solutions proposées jusqu'à présent ne sont pas complètement satisfaisantes car d'une part le niveau de température des accumulateurs en fonctionnement peut rester élevé dans certaines configurations et l'homogénéité des températures entre accumulateurs insuffisante et d'autre part le poids des systèmes de refroidissement reste élevé, surtout pour des applications à des véhicules automobiles.

US 2016/254500A1 décrit un accumulateur comprenant une cellule électrochimique et une enveloppe élastique comprenant des reliefs sur au moins une de ses faces de sorte à limiter le pliage de l'accumulateur.

JP 2006049054A décrit un accumulateur comprenant une cellule électrochimique enveloppée de manière étanche dans des feuilles ondulées, l'accumulateur comprenant des plaques interposées de part et d'autre de la cellule électrochimique entre celle-ci et les feuilles ondulées.

US 2013/115505A1 décrit un accumulateur comprenant des anode, cathodes et séparateurs sensiblement plans, chacun des anodes, cathodes et séparateurs comportant un trou traversant pour former un canal continu à travers l'accumulateur.

EP 3499606A1 décrit une pièce d'interface mécanique et d'isolation électrique, destiné à réaliser l'interface mécanique et l'isolation entre deux accumulateurs électrochimiques métal-ion alignés selon leur axe longitudinal, chacun des deux accumulateurs comprenant un boitier avec un fond et un couvercle à travers lequel débouche une traversée formant borne de sortie de l'accumulateur.

US 2017/263987A1 décrit une plaque comprenant au moins deux tôles et au moins un revêtement plastique, les tôles étant reliées l'une à l'autre de manière fixe et de sorte à créer au moins un canal pour fluide de refroidissement.

Il existe un besoin pour améliorer les solutions de refroidissement d'un pack-batterie d'une pluralité d'accumulateurs électrochimiques, notamment des accumulateurs métal-ion, afin de pallier les inconvénients précités.

Le but de l'invention est de répondre au moins en partie à ce besoin.

### Exposé de l'invention

Pour ce faire, l'invention concerne, sous l'un de ses aspects, un accumulateur électrochimique, notamment un accumulateur métal-ion, comprenant au moins une cellule électrochimique et un emballage souple agencé pour contenir avec étanchéité la au moins une cellule électrochimique tout en étant traversé par une partie des collecteurs de courant formant les bornes de sortie de l'accumulateur, l'emballage souple intégrant, sur au moins une de ses faces externes, des reliefs formant au moins une partie de canaux de refroidissement de l'accumulateur dans lesquels un fluide caloporteur est destiné à circuler. Selon l'invention, les reliefs sont des nervures en matériau compressible, imprimées directement sur la ou les faces externes de l'emballage souple.

Selon une variante de réalisation avantageuse, les canaux de refroidissement sont rectilignes, parallèles entre eux, et s'étendent le long de la direction longitudinale (X) et/ou le long de la direction latérale (Y) d'au moins une partie de la longueur et/ou de la largeur de la au moins une cellule électrochimique. Avec des canaux de refroidissement parallèles sur toute la longueur de l'accumulateur, on peut guider le fluide de refroidissement d'un coté à l'autre. Bien entendu dans le cadre de l'invention, on peut envisager que les canaux de refroidissement ne sont pas rectilignes, ni parallèles à la direction longitudinale de l'accumulateur. Par exemple, ils peuvent être zig-zag et/ou perpendiculaires à la direction longitudinale.

Avantageusement, la largeur unitaire et/ou la hauteur des canaux de refroidissement étant comprise entre 0,5 et 20 mm.

. Avantageusement, les nervures sont en matériau polymère, de préférence en matériau élastomère, par exemple les nervures peuvent être en matériau choisi parmi les silicones, les polyuréthanes, les acryliques, du styrène butadiène, le polyfluorure de vinylidène (PVDF), ou une combinaison de ceux-ci.

Selon une application avantageuse, l'emballage souple est constitué d'un empilement de trois couches.

Avantageusement encore, l'empilement est un tri-couche polyamide/aluminium/polypropylène. Il peut s'agir de l'emballage souple tri-couche commercialisé par la société MTI corporation: https://www.mtixtl.com/AluminumLaminatedFilm400mmWx7.5mL-EQ-alf-400-7.5M.aspx.

Selon un mode de réalisation avantageux, l'accumulateur comprend en outre une enveloppe externe constituée par un film thermo-rétracté ou un boitier, agencée de manière étanche autour de l'emballage souple tout en étant traversée par les bornes de sortie et en laissant dégagées un orifice d'entrée et un orifice de sortie, de sorte à délimiter un circuit de fluide de refroidissement autour de l'emballage souple.

Alternativement, selon un autre mode de réalisation avantageux, l'emballage souple comprend à chacune de ses deux extrémités longitudinales, une zone prolongée, au-delà de la cellule électrochimique, qui est percée d'un orifice débouchant formant respectivement un orifice d'entrée et un orifice de sortie de fluide de refroidissement autour de l'emballage souple.

Selon ce mode, l'accumulateur comprend de préférence au moins un joint d'étanchéité agencé sur une face externe de l'emballage souple, autour à la fois des orifices d'entrée et de sortie et des canaux de refroidissement. Ce joint extérieur permet de faire directement l'étanchéité. Au niveau de la zone prolongée, autour des orifices, si nécessaire, on peut implanter un élément dont la hauteur permet de rattraper le décalage d'épaisseur par rapport à l'épaisseur de l'accumulateur du fait de celle du joint.

Avantageusement, le(s) joint(s) est(sont) en matériau compressible, de préférence en matériau polymère, de préférence en matériau élastomère, par exemple le joint peut être en matériau choisi parmi les silicones, les polyuréthanes, les acryliques, du styrène butadiène, le polyfluorure de vinylidène (PVDF), ou une combinaison de ceux-ci.

De préférence, le(s) joint(s) et les nervures sont fabriqués à partir d'un matériau compressible similaire, voire à partir du même matériau, le joint et les nervures présentant avantageusement une compressibilité modulée entre eux.

L'accumulateur selon l'invention peut être un accumulateur Li-ion dans lequel :
- le matériau d'électrode(s) négative(s) est choisi dans le groupe comportant le graphite, le lithium, l'oxyde de titanate Li4TiO₅O₁₂, l'oxyde de silicium (SiO2);
- le matériau d'électrode(s) positive(s) est choisi dans le groupe comportant LiFePO₄ (LFP), LCO), LiNiO₂ (LNO), LiMnO₂ ou LiMn₂O₄ (LMO), LiCoO₂, LiNi_{0.33}Mn_{0.33}Co_{0.33}O (NMC), LiNi_{0.8}Co_{0.15}Al_{0.05}O₂ (NCA).

L'invention concerne également un module comprenant une pluralité d'accumulateurs électrochimiques tels que décrits précédemment, empilés les uns sur les autres et logés dans un unique boitier, agencée de manière étanche autour des emballages souples tout en étant traversé par des bornes de sortie et en laissant dégagés un orifice d'entrée commun et un orifice de sortie commun, de sorte à délimiter un circuit de fluide de refroidissement à l'intérieur du boitier.

L'avantage d'un montage par empilement au sein d'un même module, est qu'on peut conserver un format prismatique standard avec une gestion thermique intégrée et des dispositifs de protection/sécurité spécifiquement développés pour le module. Par exemple, une mesure précise de l'évolution de la température entre l'orifice d'entrée commun et l'orifice de sortie commun permet en lien avec un BMS de couper la charge si nécessaire. Également, selon un mode de réalisation avantageux, le module comprend un dispositif de protection fixé sur le boitier, le dispositif de protection étant adapté pour mesurer la pression et/ou la température du circuit de liquide de refroidissement régnant à l'intérieur du boitier. Autrement dit, ce dispositif de protection est actif en fonction l'évolution de la pression du fluide de refroidissement typiquement de l'huile plutôt que, comme selon l'état de l'art, selon l'évolution des gaz qui émanent des accumulateurs.

Les nervures sur les emballages souples des accumulateurs peuvent être imprimées en matériaux élastomères. Les élastomères ont pour avantage d'être compressible, c'est-à-dire qu'ils peuvent se déformer pendant la réalisation du module. Ainsi, ils permettent de rattraper des variations de côte des cellules (accumulateurs) et d'un assemblage par empilement d'accumulateurs et ainsi d'obtenir une force de compression homogène. Le jeu ainsi rattrapé peut aller avantageusement de 0,1 à 1 mm.

Ainsi, un module selon l'invention peut être dimensionné pour avoir un refroidissement nécessaire à une charge rapide des accumulateurs, mais avec un ou plusieurs dispositifs de protection/sécurité qui permettent d'éviter les emballements thermiques.

L'invention concerne encore un pack-batterie comprenant un BMS, une pluralité d'accumulateurs électrochimiques tels que décrits précédemment et/ou comme décrits ci-avant et un circuit de refroidissement de fluide adapté pour faire circuler un fluide de refroidissement dans les canaux de refroidissement d'au moins une des faces externes d'un des accumulateurs.

Avantageusement, le BMS est adapté pour interrompre la charge électrique de tout ou partie des accumulateurs en cas de pression du fluide de refroidissement supérieure à un seuil prédéterminé et/ou en cas de température supérieure à un autre seuil prédéterminé.

L'invention concerne enfin un procédé de fabrication d'au moins un accumulateur électrochimique comme décrit précédemment, comprenant une étape d'impression de reliefs en matériau compressible, de préférence par sérigraphie ou dépôt de cordons, directement sur au moins un des faces externes de l'emballage souple de l'accumulateur.

De préférence, l'étape d'impression sur l'emballage souple est réalisée avant ou après l'assemblage de l'accumulateur. De préférence, l'emballage souple sous forme d'un rouleau est déroulé pendant l'étape d'impression.

En résumé, l'invention consiste essentiellement à réaliser des canaux de refroidissement d'un accumulateur électrochimique directement sur la ou les faces externes de son emballage souple (« pouch »)

Comme évoqué ci-dessus, on peut former un circuit de fluide de refroidissement, typiquement de l'huile, propre à chaque accumulateur, ou commun à un ensemble d'accumulateurs assemblés en module.

Autrement dit, grâce à l'invention, on peut définir des circuits de fluide de refroidissement qui sont indépendants par accumulateur/module. Cela peut permettre par exemple d'augmenter le débit dans les accumulateurs les plus chauds, mettre en place des soupapes de sécurité à l'échelle d'un accumulateur ou d'un module, mesurer individuellement les températures d'entrée et sortie de fluide de refroidissement pour chaque accumulateur/module.

En outre, le fluide de refroidissement permet une homogénéisation de la pression de compression sur les surfaces des accumulateurs.

En cas d'emballement thermique d'un ou plusieurs accumulateurs, on peut diminuer le volume de fluide de refroidissement au contact direct des accumulateurs non concernés par l'emballement, et au contraire augmenter le volume au contact de chaque accumulateur en emballement, de sorte à augmenter l'épaisseur de fluide le séparant des autres accumulateurs.

Un avantage subséquent de mettre en contact direct le fluide de refroidissement sur l'ensemble des faces d'un accumulateur est que les parties extérieures d'un module ou d'un pack-batterie comme les boitiers et busbars n'ont plus à être immergées dans le fluide de refroidissement, tel que l'huile.

Par conséquent, l'invention permet de garantir un refroidissement efficace d'un accumulateur puisqu'au plus près de sa zone active (la cellule électrochimique), avec un système qui augmente très peu le poids et volume puisque combiné à la mise en oeuvre d'un emballage souple, il met en oeuvre des canaux de refroidissement qui font partie intégrante de celui-ci.

On peut ainsi envisager la réalisation de modules ou de pack-batterie qui sont à la fois légers et qui intègrent un système de refroidissement efficace. Cela est très avantageux pour les pack-batteries, notamment pour des applications aux véhicules automobiles, qui sont destinés à être l'objet de (re)charge électrique de forte puissance, typiquement jusqu'à 150kW voire plus.

De préférence, la réalisation des canaux de refroidissement se fait par impression directe sur l'emballage souple, soit par sérigraphie, soit par une technique de dépôt de cordons.

En fonction de l'accumulateur ou des besoins, le matériau compressible utilisé pour l'impression peut être flexible ou intermédiaire entre un matériau flexible et rigide.

La réalisation des canaux par impression selon l'invention permet de faciliter grandement le process de fabrication des emballages souples d'accumulateur, car l'impression des canaux peut se faire directement sur le matériau d'emballage souple avant l'assemblage proprement dit des accumulateurs. Cette impression peut se faire par exemple dans un procédé courant de rouleau-à-rouleau (en anglais « roll-to-roll »). Les rouleaux pré-imprimés de canaux peuvent ainsi constituer un produit intermédiaire pour la fabrication/assemblage des accumulateurs.

D'autres avantages et caractéristiques de l'invention ressortiront mieux à la lecture de la description détaillée d'exemples de mise en oeuvre de l'invention faite à titre illustratif et non limitatif en référence aux figures suivantes.

### Brève description des dessins

[Fig 1] est une vue schématique en perspective éclatée montrant les différents éléments d'un accumulateur lithium-ion.
[Fig 2] est une vue de face montrant un accumulateur lithium-ion avec son emballage souple selon l'état de l'art.
[Fig 3] est une vue en perspective d'un accumulateur lithium-ion selon l'état de l'art avec son emballage rigide constitué d'un boitier de forme cylindrique.
[Fig 4] est une vue en en perspective d'un accumulateur lithium-ion selon l'état de l'art avec son emballage rigide constitué d'un boitier de forme prismatique.
[Fig 5] est une vue en perspective d'un assemblage au moyen de busbars d'accumulateurs lithium-ion selon l'état de l'art, formant un pack-batterie.
[Fig 6] est une vue en perspective exemple d'accumulateur Li-ion de format prismatique standard, selon l'invention.
[Fig 7] est une représentation schématique en coupe longitudinale d'un premier module à boitier intégrant une pluralité d'accumulateurs selon l'invention.
[Fig 8] est une vue de côté d'un module selon la figure 7.
[Fig 9] est une vue schématique en coupe longitudinale d'un module à eux accumulateurs adjacents selon l'invention ayant chacun leur propre circuit de refroidissement.
[Fig 10] est une vue de face d'un mode de réalisation avantageux d'accumulateur Li-ion de format prismatique standard, selon l'invention.

### Description détaillée

Les figures 1 à 5 sont relatives à des exemples différents d'accumulateur Li-ion, d'emballage souple et boitiers d'accumulateurs ainsi qu'un pack-batterie selon l'état de l'art. Ces figures 1 à 5 ont déjà été commentées en préambule et ne le sont donc pas plus ci-après.

Par souci de clarté, les mêmes références désignant les mêmes éléments selon l'état de l'art et selon l'invention sont utilisées pour toutes les figures 1 à 10.

On a représenté en figures 6, un exemple d'accumulateur A de type Li-ion de format prismatique standard, comprenant un emballage souple (« pouch ») 6 dont les faces principales externes présentent des canaux 60 qui ont été réalisés par impression directe de nervures 61 délimitant lesdits canaux 60.

Ces canaux 60 sont destinés à permettre la circulation d'un fluide de refroidissement tel que de l'huile, directement au contact de l'emballage souple 6.

Les nervures 61 définissant les canaux 60 peuvent être imprimées directement sur l'emballage souple 6, soit une fois l'accumulateur assemblé, i.e. l'emballage souple scellé autour de la cellule électrochimique avec traversée des bornes de sorties 4, 5, soit dès la fabrication de l'emballage souple 6. On peut ainsi dérouler des rouleaux d'emballage souple et imprimer en continu, aux endroits souhaités des nervures 61.

L'impression peut par exemple être réalisée par sérigraphie avec des écrans aux designs spécifiques. On peut aussi procéder avec des équipements de dépôts directs par cordons.

La géométrie des nervures 61 et des canaux 60 ainsi imprimée peut varier de 0,5 à 20 mm en fonction du dimensionnement du refroidissement et de la perte de charge souhaités. Bien évidemment, le dimensionnement des canaux 60 se fait en fonction de la viscosité du fluide de refroidissement choisi, tel que de l'huile et de la géométrie intrinsèque aux accumulateurs et ce afin d'optimiser la perte de charge dans chaque volume de circulation de fluide autour de l'accumulateur.

En fonction du type d'emballage souple et du montage des circuits de refroidissement, individuellement autour d'un accumulateur ou en module comme détaillé ci-après, les matériaux imprimés peuvent présenter des caractéristiques diverses et variés. Par exemple, les nervures 61 peuvent être en silicone, polyuréthane, acrylique ou styrène butadiène ou en polyfluorure de vinylidène ou en une combinaison de ceux-ci.

On veille bien évidemment à ce que les matériaux et le dimensionnement mis en oeuvre pour la réalisation des canaux soient définis pour respecter les chaines de côtes des assemblages des accumulateurs individuellement ou au sein de modules. Par exemple, même si une variation de l'épaisseur totale, i.e. avec les canaux de refroidissement, peut être considérée comme conséquente sur un emballage souple 6 usuel, de fait la surépaisseur engendrée n'est pas gênante. En effet, la mise en place de joints 9 et/ou de nervures 61 en matériau compressible, typiquement en silicone peut conférer une liberté dans les chaînes de côtés à respecter.

En outre, pour obtenir une meilleure étanchéité périphérique, on préfèrera mettra en oeuvre des joints 9 plus compressibles que les nervures 61.

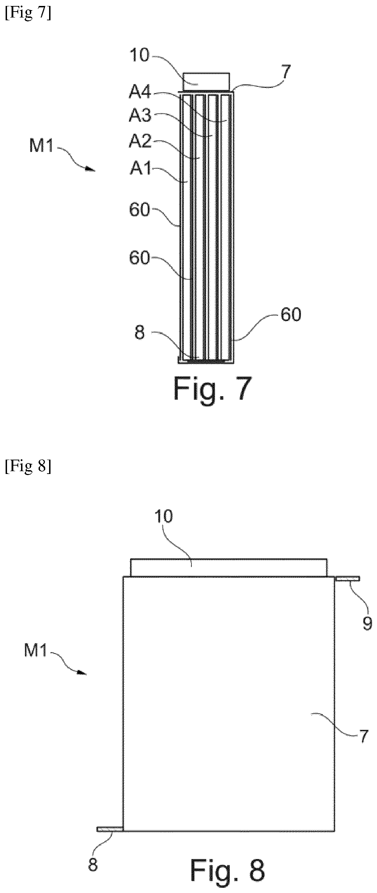

Les figures 7 et 8 illustrent un mode de réalisation avantageux selon lequel une pluralité d'accumulateurs A1-A4 à canaux de refroidissement 60 imprimés sur leur emballages souples 6 sont empilés avec compression les uns sur les autres en étant logés dans un boitier commun 7.

Le module M1 qui résulte de ce montage présente un format prismatique standard avec une gestion thermique intégrée au sein du boitier 7 avec un seul circuit de refroidissement commun à l'ensemble des accumulateurs A1-A4. En effet, le fluide de refroidissement, tel que de l'huile, pénètre dans un orifice d'entrée 8, débouchant en bas du boitier 7 dans l'exemple illustré et sort par un orifice de sortie 9 débouchant en haut du boitier 7 dans l'exemple illustré. Au sein du boitier 7, le fluide circule dans tous les canaux de refroidissement 60 directement au contact des faces externes de chacun des accumulateurs. Pour garantir la sécurité du module, notamment en cas d'une charge rapide de forte puissance, il est possible de mesurer précisément l'évolution de la température entre l'entrée 8 et la sortie 9 du boitier 7. Cette information peut être transmise au BMS d'un pack-batterie qui en cas d'un dépassement de seuil prédéterminé peut interrompre toute charge du module si nécessaire.

De la même manière, il est possible en complément ou en lieu et place de la mesure de l'évolution de la température de mesurer l'évolution de la pression du fluide de refroidissement au sein du boitier 7. Comme montré sur les figures 7 et 8, le boitier 7 peut supporter le ou les dispositifs de protection/sécurité 10 qui lui est(sont) propre(s) et qui est(sont) destiné(s) à être relié(s) au BMS. Grâce au(s) dispositif(s) de protection/sécurité on peut éviter les emballements thermiques au niveau d'un module et donc la propagation à d'autres modules au sein d'un même pack-batterie.

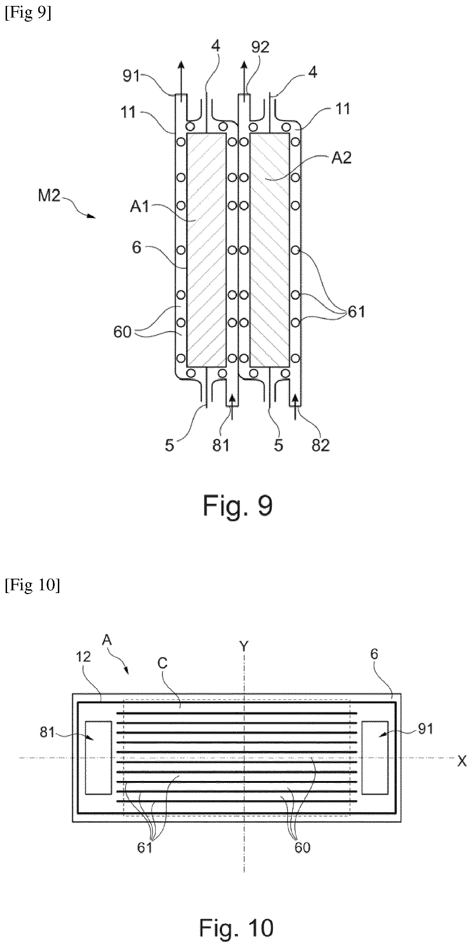

La figure 9 illustre une alternative de module. Le module M2 illustré comprend deux accumulateurs adjacents A1, A2 qui ont chacun leur propre circuit de refroidissement intégré. Ainsi, chaque accumulateur A1, A2 est recouvert d'un film 11 thermo-rétracté sur l'enveloppe souple 6. Les canaux de refroidissement 60 sont donc délimités par ce film 11. Les bornes de sorties 4, 5 traversent par ailleurs de manière étanche ce film thermo-rétracté 11.

Comme montré, chaque accumulateur A1, A2 a donc son circuit de refroidissement de fluide avec un orifice d'entrée propre 81, 82 et un orifice de sortie propre 91, 92.

La figure 10 illustre un autre mode de réalisation avantageux d'un accumulateur A. L'enveloppe souple 6 est ici rallongée au-delà de la zone active de l'accumulateur, c'est-à-dire au-delà de l'emplacement de la cellule électrochimique C, symbolisée par des pointillés en figure 10. Plus précisément, à chacune des extrémités longitudinales de l'enveloppe souple 6, une zone prolongée percée d'un orifice débouchant formant respectivement un orifice d'entrée 81 et un orifice de sortie 91 de fluide de refroidissement autour de l'enveloppe souple. De fait, lorsqu'on empile plusieurs accumulateurs A réalisés avec ces orifices 81, 91 on reconstitue en quelque sorte des clarinettes d'alimentation et d'évacuation de fluide de refroidissement.

Comme montré, un joint d'étanchéité 12 est de préférence agencé sur une face externe de l'enveloppe souple 6, autour à la fois des orifices d'entrée 81 et de sortie 91 et des canaux de refroidissement 60 pour faire directement l'étanchéité.

D'autres variantes et améliorations peuvent être envisagées sans pour autant sortir du cadre de l'invention.

Par exemple, si dans l'ensemble des exemples illustrés, les canaux de refroidissement 60 sont réalisés rectilignes, parallèles entre eux sur toute la longueur selon la direction longitudinale X de l'accumulateur, on peut tout aussi bien envisager de les faire selon le long de la direction latérale (Y), non rectilignes, par exemple en zig-zag, perpendiculaires à cette direction, et sur une partie seulement de la longueur de l'accumulateur.

Tout emballage souple ou rigide qui convient pour faire l'étanchéité d'un accumulateur électrochimique peut convenir dans le cadre de l'invention.

## Revendications

1. Accumulateur électrochimique (A), notamment un accumulateur métal-ion, comprenant au moins une cellule électrochimique et un emballage souple (6) agencé pour contenir avec étanchéité la au moins une cellule électrochimique tout en étant traversé par une partie des collecteurs de courant formant les bornes de sortie (4, 5) de l'accumulateur, l'emballage souple intégrant, sur au moins une de ses faces externes, des reliefs (61) formant au moins une partie de canaux de refroidissement (60) de l'accumulateur dans lesquels un fluide caloporteur est destiné à circuler,
les reliefs (61) étant des nervures en matériau compressible, imprimées directement sur la ou les faces externes de l'emballage souple.

2. Accumulateur électrochimique (A) selon la revendication 1, comprenant une cellule électrochimique enroulée à géométrie prismatique.

3. Accumulateur électrochimique (A) selon la revendication 1, les canaux de refroidissement étant rectilignes, parallèles entre eux et s'étendant le long de la direction longitudinale (X) et/ou le long de la direction latérale (Y) d'au moins une partie de la longueur et/ou de la largeur de la au moins une cellule électrochimique.

4. Accumulateur électrochimique (A) selon l'une des revendications précédentes, la largeur unitaire et/ou la hauteur des canaux de refroidissement étant comprise entre 0,5 et 20 mm.

5. Accumulateur électrochimique (A) selon l'une des revendications précédentes, les nervures étant en matériau polymère, de préférence en matériau élastomère, par exemple les nervures peuvent être en matériau choisi parmi les silicones, les polyuréthanes, les acryliques, du styrène butadiène, le polyfluorure de vinylidène (PVDF), ou une combinaison de ceux-ci.

6. Accumulateur électrochimique (A) selon l'une des revendications précédentes, l'emballage souple étant constitué d'un empilement de trois couches, l'emballage souple étant de préférence un tri-couche polyamide/aluminium/polypropylène.

7. Accumulateur électrochimique (A) selon l'une des revendications précédentes, comprenant en outre une enveloppe externe constituée par un film thermo-rétracté (11) ou un boitier (7), agencée de manière étanche autour de l'emballage souple tout en étant traversée par les bornes de sortie et en laissant dégagées un orifice d'entrée (8, 81, 82) et un orifice de sortie (9, 91, 92), de sorte à délimiter un circuit de fluide de refroidissement autour de l'emballage souple.

8. Accumulateur électrochimique (A) selon l'une des revendications précédentes, l'emballage souple comprenant à chacune de ses deux extrémités longitudinales, une zone, au-delà de la cellule électrochimique, qui est percée d'un orifice débouchant formant respectivement un orifice d'entrée (8, 81, 82) et un orifice de sortie (9, 91, 92) de fluide de refroidissement autour de l'emballage souple.

9. Accumulateur électrochimique (A) selon la revendication 8, comprenant au moins un joint d'étanchéité (12) agencé sur une face externe de l'emballage souple, autour à la fois des orifices d'entrée et de sortie et des canaux de refroidissement.

10. Accumulateur électrochimique (A) selon l'une des revendications précédentes, étant un accumulateur Li-ion dans lequel :
- le matériau d'électrode(s) négative(s) est choisi dans le groupe comportant le graphite, le lithium, l'oxyde de titanate (Li₄TiO₅O₁₂), l'oxyde de silicium (SiO₂);
- le matériau d'électrode(s) positive(s) est choisi dans le groupe comportant LiFePO4, LiCoO2 (LCO), LiNiO₂ (LNO), LiMnO₂ ou LiMn₂O₄ (LMO), LiNi_{0.33}Mn_{0.33}Co_{0.33}O₂ (NMC), LiNi_{0.8}Co_{0.15}Al_{0.05}O₂ (NCA).

11. Module (M1) comprenant une pluralité d'accumulateurs électrochimiques (A1, A2, A3, A4) selon l'une des revendications précédentes empilés les uns sur les autres et logés dans un unique boitier (7), agencé de manière étanche autour des emballages souples (6) tout en étant traversé par des bornes de sortie et en laissant dégagé un orifice d'entrée commun (8) et un orifice de sortie commun (9), de sorte à délimiter un circuit de fluide de refroidissement à l'intérieur du boitier.

12. Module (M1) selon la revendication 11, comprenant un dispositif de protection (10) fixé sur le boitier, le dispositif de protection étant adapté pour mesurer la pression et/ou la température du circuit de liquide de refroidissement régnant à l'intérieur du boîtier.

13. Pack-batterie comprenant un BMS, une pluralité d'accumulateurs électrochimiques selon l'une des revendications 1 à 10 ou de modules selon les revendications 11 à 12, et un circuit de refroidissement de fluide adapté pour faire circuler un fluide de refroidissement dans les canaux de refroidissement d'au moins une des faces externes d'un des accumulateurs, le BMS étant de préférence adapté pour interrompre la charge électrique de tout ou partie des accumulateurs en cas de pression du fluide de refroidissement supérieure à un seuil prédéterminé et/ou en cas de température supérieure à un autre seuil prédéterminé.

14. Procédé de fabrication d'au moins un accumulateur électrochimique selon l'une des revendications précédentes 1 à 10 comprenant une étape d'impression de reliefs (61) en matériau compressible, de préférence par sérigraphie ou dépôt de cordons, directement sur au moins une des faces externes de l'emballage souple de l'accumulateur.

15. Procédé de fabrication selon la revendication 14, l'étape d'impression étant réalisée avant ou après assemblage de l'accumulateur, l'emballage souple sous forme d'un rouleau étant de préférence déroulé pendant l'étape d'impression.

## Patentansprüche

1. Elektrochemischer Akku (A), insbesondere ein Metall-Ionen-Akku, beinhaltend mindestens eine elektrochemische Zelle und eine flexible Verpackung (6), die dazu angeordnet ist, die mindestens eine elektrochemische Zelle dichtend zu umgeben, während sie gleichzeitig von einem Teil der Stromkollektoren, die die Ausgangsanschlüsse (4, 5) des Akkus bilden, durchquert wird, wobei die flexible Verpackung auf mindestens einer ihrer Außenflächen Reliefs (61) umfasst, die mindestens einen Teil von Kühlkanälen (60) des Akkus bilden, in denen ein Wärmeträgerfluid zirkulieren soll,
wobei die Reliefs (61) Rippen aus einem kompressiblen Material sind, die direkt auf die eine oder die mehreren Außenflächen der flexiblen Verpackung gedruckt sind.

2. Elektrochemischer Akku (A) nach Anspruch 1, beinhaltend eine aufgerollte elektrochemische Zelle mit prismatischer Geometrie.

3. Elektrochemischer Akku (A) nach Anspruch 1, wobei die Kühlkanäle geradlinig und untereinander parallel sind und sich entlang der Längsrichtung (X) und/oder entlang der Querrichtung (Y) von mindestens einem Teil der Länge und/oder der Breite der mindestens einen elektrochemischen Zelle erstrecken.

4. Elektrochemischer Akku (A) nach einem der vorhergehenden Ansprüche, wobei die Einheitsbreite und/oder die Höhe der Kühlkanäle zwischen 0,5 und 20 mm beträgt.

5. Elektrochemischer Akku (A) nach einem der vorhergehenden Ansprüche, wobei die Rippen aus einem Polymermaterial, vorzugsweise einem Elastomermaterial, bestehen, beispielsweise können die Rippen aus einem Material bestehen, das aus Silikonen, Polyurethanen, Acrylharzen, Styrolbutadien, Polyvinylidenfluorid (PVDF) oder einer Kombination aus diesen ausgewählt ist.

6. Elektrochemischer Akku (A) nach einem der vorhergehenden Ansprüche, wobei die flexible Verpackung aus einem Stapel aus drei Schichten besteht, wobei die flexible Verpackung vorzugsweise eine Drei-Schichten-Anordnung aus Polyamid/Aluminium/Polypropylen ist.

7. Elektrochemischer Akku (A) nach einem der vorhergehenden Ansprüche, ferner beinhaltend eine Außenhülle, die aus einer Wärmeschrumpffolie (11) oder einem Gehäuse (7) besteht und dichtend um die flexible Verpackung angeordnet ist, während sie gleichzeitig von den Ausgangsanschlüssen durchquert wird und eine Eingangsöffnung (8, 81, 82) und eine Ausgangsöffnung (9, 91, 92) freihält, um so einen Kühlfluidkreislauf um die flexible Verpackung herum zu begrenzen.

8. Elektrochemischer Akku (A) nach einem der vorhergehenden Ansprüche, wobei die flexible Verpackung an jedem ihrer zwei Längsenden einen Bereich jenseits der elektrochemischen Zelle beinhaltet, der von einer Durchgangsöffnung durchbohrt wird, die eine Eingangsöffnung (8, 81, 82) bzw. eine Ausgangsöffnung (9, 91, 92) für Kühlfluid um die flexible Verpackung herum bildet.

9. Elektrochemischer Akku (A) nach Anspruch 8, beinhaltend mindestens eine Dichtung (12), die an einer Außenfläche der flexiblen Verpackung sowohl um die Eintritts- und Austrittsöffnung als auch um die Kühlkanäle herum angeordnet ist.

10. Elektrochemischer Akku (A) nach einem der vorhergehenden Ansprüche, der ein Li-Ionen-Akku ist, wobei:
- das Material von einer oder mehreren negativen Elektroden aus der Gruppe ausgewählt ist, die Graphit, Lithium, Titanat-Oxid (Li₄TiO₅O₁₂), Siliciumoxid (SiO₂) umfasst;
- das Material von einer oder mehreren positiven Elektroden aus der Gruppe ausgewählt ist, die LiFePO4, LiCoO2 (LCO), LiNiO₂ (LNO), LiMnO₂ oder LiMn₂O₄ (LMO), LiNi_{0,33}Mn_{0,33}Co_{0,33}O₂ (NMC), LiNi_{0,8}Co_{0,15}Al_{0,05}O₂ (NCA) umfasst.

11. Modul (M1), beinhaltend eine Vielzahl von elektrochemischen Akkus (A1, A2, A3, A4) nach einem der vorhergehenden Ansprüche, die übereinander gestapelt und in einem einzigen Gehäuse (7) aufgenommen sind, welches dichtend um die flexiblen Verpackungen (6) herum angeordnet ist, während es gleichzeitig von Ausgangsanschlüssen durchquert wird und eine gemeinsame Eingangsöffnung (8) und eine gemeinsame Ausgangsöffnung (9) freihält, um einen Kühlfluidkreislauf im Inneren des Gehäuses zu begrenzen.

12. Modul (M1) nach Anspruch 11, beinhaltend eine Schutzvorrichtung (10), die an dem Gehäuse befestigt ist, wobei die Schutzvorrichtung dazu angepasst ist, den Druck und/oder die Temperatur des Kühlflüssigkeitskreislaufs, die im Inneren des Gehäuses herrschen, zu messen.

13. Akkupack, beinhaltend ein BMS, eine Vielzahl von elektrochemischen Akkus nach einem der Ansprüche 1 bis 10 oder Modulen nach den Ansprüchen 11 bis 12 und einen Fluidkühlkreislauf, der dazu angepasst ist, ein Kühlfluid in den Kühlkanälen von mindestens einer der Außenflächen eines der Akkus zirkulieren zu lassen, wobei das BMS vorzugsweise dazu angepasst ist, das elektrische Laden von allen oder einem Teil der Akkus zu unterbrechen, wenn ein Druck des Kühlfluids größer als ein vorbestimmter Schwellenwert ist und/oder wenn eine Temperatur größer als ein anderer vorbestimmter Schwellenwert ist.

14. Verfahren zur Herstellung mindestens eines elektrochemischen Akkus nach einem der vorhergehenden Ansprüche 1 bis 10, beinhaltend einen Schritt des Druckens von Reliefs (61) aus einem kompressiblen Material, vorzugsweise durch Siebdruck oder das Auftragen von Raupen, direkt auf mindestens eine der Außenflächen der flexiblen Verpackung des Akkus.

15. Herstellungsverfahren nach Anspruch 14, wobei der Schritt des Druckens vor oder nach dem Zusammenbau des Akkus durchgeführt wird, wobei die flexible Verpackung in Form einer Rolle vorzugsweise während des Schritts des Druckens abgerollt wird.

## Claims

1. Electrochemical accumulator (A), in particular a metal-ion accumulator, comprising at least one electrochemical cell and a flexible packaging (6) that is arranged to contain the at least one electrochemical cell in a sealtight manner while at the same time having a portion of the current collectors that form the output terminals (4, 5) of the accumulator passing through it, the flexible packaging incorporating, on at least one of its outer faces, reliefs (61) that form at least a portion of cooling ducts (60) of the accumulator in which a heat-transfer fluid is intended to circulate,
the reliefs (61) being ribs that are made from compressible material and are printed directly onto the one or more outer faces of the flexible packaging.

2. Electrochemical accumulator (A) according to Claim 1, comprising a wound electrochemical cell with prismatic geometry.

3. Electrochemical accumulator (A) according to Claim 1, the cooling ducts being rectilinear, mutually parallel and extending along the longitudinal direction (X) and/or along the lateral direction (Y) of at least a portion of the length and/or of the width of the at least one electrochemical cell.

4. Electrochemical accumulator (A) according to one of the preceding claims, the unit width and/or the height of the cooling ducts being between 0.5 and 20 mm.

5. Electrochemical accumulator (A) according to one of the preceding claims, the ribs being made from polymer material, preferably made from elastomer material, for example the ribs may be made from a material selected from among silicones, polyurethanes, acrylics, styrenebutadiene, polyvinylidene fluoride (PVDF), or a combination thereof.

6. Electrochemical accumulator (A) according to one of the preceding claims, the flexible packaging consisting of a stack of three layers, the flexible packaging preferably being a polyamide/aluminium/polypropylene tri-layer.

7. Electrochemical accumulator (A) according to one of the preceding claims, further comprising an outer envelope that consists of a heat-shrunk film (11) or a housing (7) and is arranged in a sealtight manner around the flexible packaging while at the same time having the output terminals passing through it and leaving an inlet orifice (8, 81, 82) and an outlet orifice (9, 91, 92) unobstructed, so as to delimit a cooling fluid circuit around the flexible packaging.

8. Electrochemical accumulator (A) according to one of the preceding claims, the flexible packaging comprising, at each of its two longitudinal ends, a region, beyond the electrochemical cell, which is pierced by a through-orifice that forms, respectively, an inlet orifice (8, 81, 82) and an outlet orifice (9, 91, 92) for cooling fluid around the flexible packaging.

9. Electrochemical accumulator (A) according to Claim 8, comprising at least one seal (12) arranged on an outer face of the flexible packaging, around the inlet and outlet orifices as well as the cooling ducts.

10. Electrochemical accumulator (A) according to one of the preceding claims, being a Li-ion accumulator in which:
- the material of the negative electrode(s) is selected from the group comprising graphite, lithium, titanate oxide (Li₄TiO₅O₁₂), silicon oxide (SiO₂);
- the material of the positive electrode(s) is selected from the group comprising LiFePO4, LiCoO2 (LCO), LiNiO₂ (LNO), LiMnO₂ or LiMn₂O₄ (LMO), LiNi_{0.33}Mn_{0.33}Co_{0.33}O₂ (NMC), LiNi_{0.8}Co_{0.15}Al_{0.05}O₂ (NCA) .

11. Module (M1) comprising a plurality of electrochemical accumulators (A1, A2, A3, A4) according to one of the preceding claims, said accumulators being stacked on top of one another and housed in a single housing (7), which is arranged in a sealtight manner around the flexible packagings (6) while at the same time having output terminals passing through it and leaving a common inlet orifice (8) and a common outlet orifice (9) unobstructed, so as to delimit a cooling fluid circuit inside the housing.

12. Module (M1) according to Claim 11, comprising a protective device (10) that is fastened to the housing, the protective device being designed to measure the pressure and/or the temperature of the cooling liquid circuit prevailing inside the housing.

13. Battery pack comprising a BMS, a plurality of electrochemical accumulators according to one of Claims 1 to 10 or modules according to Claims 11 and 12, and a fluid cooling circuit that is designed to circulate a cooling fluid in the cooling ducts of at least one of the outer faces of one of the accumulators, the BMS preferably being designed to interrupt the electrical charging of all or some of the accumulators in the event of a pressure of the cooling fluid that is greater than a predetermined threshold and/or in the event of a temperature that is greater than another predetermined threshold.

14. Method for manufacturing at least one electrochemical accumulator according to one of the preceding Claims 1 to 10, said method comprising a step of printing reliefs (61) made from compressible material, preferably by screen printing or bead deposition, directly onto at least one of the outer faces of the flexible packaging of the accumulator.

15. Manufacturing method according to Claim 14, the printing step being carried out before or after the accumulator has been assembled, the flexible packaging in the form of a roll preferably being unwound during the printing step.
